(19) Europäisches Patentamt
European Patent Office
Office européen des brevets

(11) **EP 1 843 265 A1**

(12) **EUROPEAN PATENT APPLICATION**

(43) Date of publication:
**10.10.2007 Bulletin 2007/41**

(51) Int Cl.:
***G06F 17/50*** (2006.01)

(21) Application number: **06425244.8**

(22) Date of filing: **07.04.2006**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(71) Applicant: **ANSALDO ENERGIA S.P.A.**
**16152 Genova (IT)**

(72) Inventor: **Rigoli, Luigi**
**16166 Genova (IT)**

(74) Representative: **Jorio, Paolo et al**
**STUDIO TORTA S.r.l.**
**Via Viotti, 9**
**10121 Torino (IT)**

(54) **Method of determining erosion areas of a turbine machine**

(57) A method of determining erosion areas of a turbine machine (1) includes defining geometric limits of a motion range that can be occupied by a stream of fluid having a low-density phase and a high-density phase. The high-density phase is modelled in the form of a number of droplets (20) dispersed in the low-density phase. A trajectory ($T_K$) is calculated in the motion range for each droplet (20), and impact areas (E1, E2, E3) of the droplets (20) on parts (3, 6) of the turbine machine (1) are defined on the basis of the calculated trajectories ($T_K$). The trajectories ($T_K$) are calculated by defining and integrating motion equations (7) for each droplet (20) .

Fig.8

EP 1 843 265 A1

**Description**

The present invention relates to a method of determining erosion areas of a turbine machine.

As is known, many types of turbine machines have mechanical parts (particularly the rotor blades) which are subject to erosion caused by interaction with the work fluid. Erosion may depend on impurities or foreign particles in the primary fluid, or, if the work fluid is two-phase with a significant difference in density between the two phases, may be caused by the fluid itself (more specifically, by the higher-density phase). The latter case is particularly critical, by applying to normal operating conditions of large groups of turbine machines, such as steam turbines.

Erosion is normally counteracted by protective coating or hardening the rotor blades. Protective treatment of the rotor blades, however, is expensive, in some cases may even impair the fatigue resistance of the steel, and is therefore best restricted to the parts actually subject to erosion. On the other hand, precise monitoring of working systems in various operating conditions, as required to determine the most critical areas, is difficult to implement.

Prototypes or mockups of each type of system have therefore been proposed, on which laboratory tests and intense data processing are conducted using two-phase-flow fluid-dynamic models. Such models, however, are extremely complex, by taking into account three-dimensional effects, interaction between the phases, condensation shock, and transonic phenomena; and the time taken as a whole for mockup preparation, testing, and data processing and interpretation is considerable, and incompatible with both normal design schedules and extemporaneous erosion checks in abnormal operating conditions.

It is an object of the present invention to provide a method of determining erosion areas of a turbine machine, designed to eliminate the aforementioned drawbacks.

According to the present invention, there is provided a method of determining erosion areas of a turbine machine, as claimed in Claim 1.

A number of non-limiting embodiments of the present invention will be described by way of example with reference to the accompanying drawings, in which:

Figure 1 shows an axial section of a turbine machine stage;
Figure 2 shows a number of blades of the Figure 1 turbine machine in a blade-to-blade plane;
Figure 3 shows a block diagram of a processing unit implementing the method according to the present invention;
Figure 4 shows a model employed in the method according to the present invention;
Figure 5 shows a graph of quantities relating to the method according to the present invention;
Figure 6 shows trajectories calculated using the method according to the present invention;
Figures 7a-7e show sections of a Figure 1 turbine machine blade in respective blade-to-blade planes;
Figure 8 shows a flow chart of the method implemented by the Figure 3 processing unit.

The invention will be described with reference to a steam turbine, though this is in no way limiting, in that the invention advantageously applies to any type of turbine machine employing a two-phase fluid or a fluid normally containing impurities.

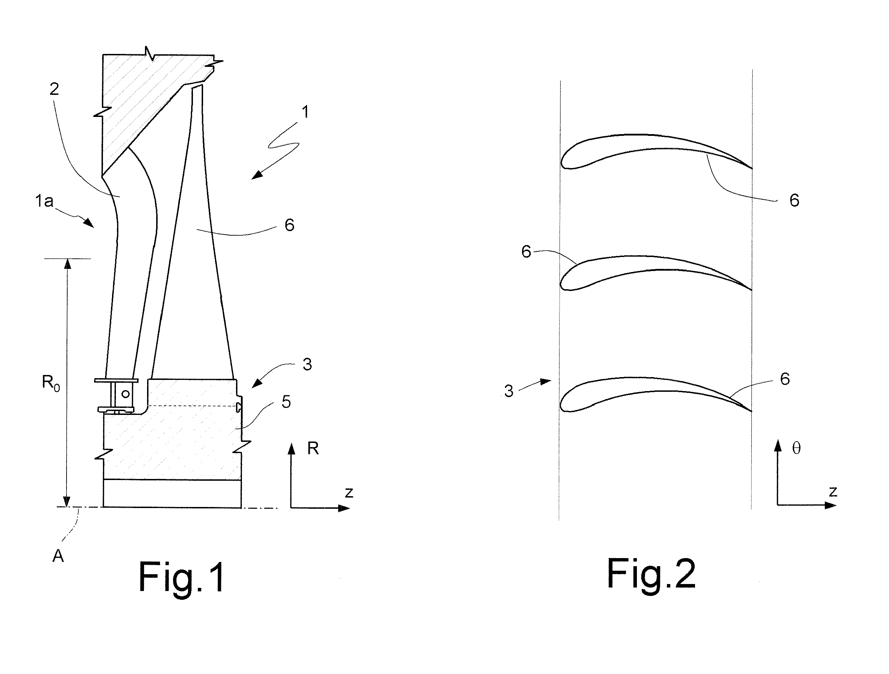

Figure 1 shows, by way of example, a meridian-plane section of a stage 1a of a known steam turbine 1 comprising a stator 2 and a rotor 3. Rotor 3 is mounted on a shaft 5 rotating about an axis of rotation A, and comprises a number of radial blades 6. Figure 2 shows a spread-out view of rotor 3 in a blade-to-blade plane at a distance $R_0$ from axis A (i.e. in a plane formed by developing a cylindrical surface section of radius $R_0$ and coaxial with axis A).

The work fluid in turbine 1 is obviously steam, which has a low-density air phase and a high-density liquid phase.

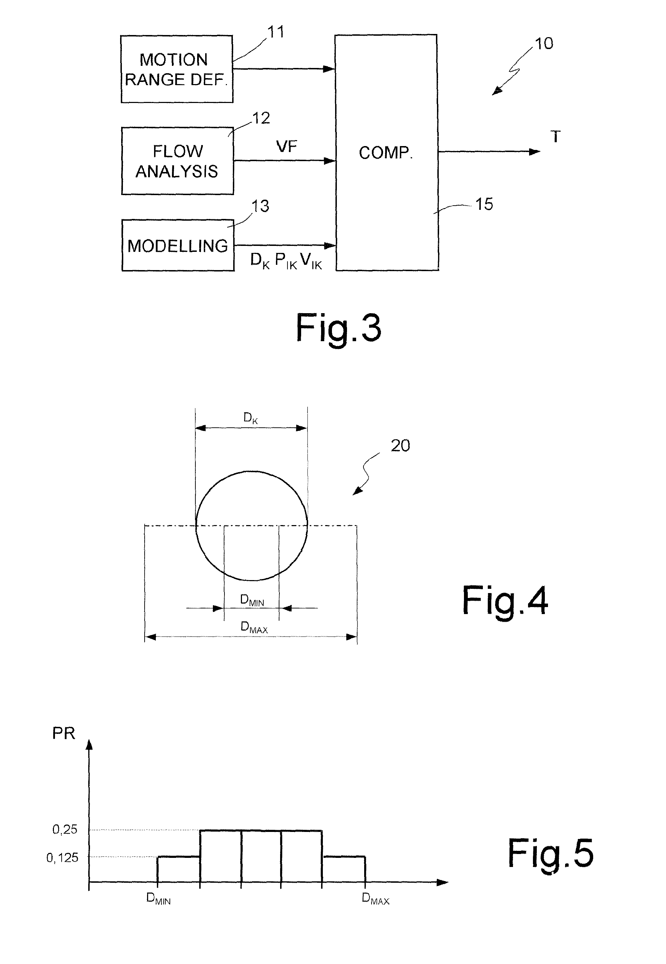

The method according to the invention is implemented by a processing unit 10 of the type shown in Figure 3. More specifically, processing unit 10 comprises a limit definition module 11, a flow analysis module 12, a modelling module 13, and a computing module 15.

Limit definition module 11 is configured to geometrically define the limits of the motion range being examined, and in particular represents the shape and position of blades 6, also taking into account the angular speed ω of rotor 3. Here and hereinafter, the term "motion range" is intended to mean the free space that can be occupied by the work fluid, and is defined by stator 2 and rotor 3 (in particular, blades 6).

Flow analysis module 12 is configured to determine the (stationary) low-density phase flow conditions in stage 1a of turbine 1 alongside variations in load. More specifically, flow analysis module 12 supplies a velocity range VF describing velocity distribution of the low-density phase in stage 1a. That is, velocity range VF is a matrix containing low-density phase flow velocity values at a predetermined number of points, e.g. forming a grid with a given pitch, and is also defined as a function of a percentage of maximum load. In the embodiment described, low-density phase flow is analysed using two-dimensional methods, preferably a through-flow-type method for analysis in the meridian plane (i.e. perpendicular to axis A), and a Martensen-type method for analysis in the blade-to-blade plane.

Modelling module 13 is configured to define a high-density phase model as a function of load conditions and of velocity range VF of the low-density phase, and also defines initial motion conditions of the high-density phase.

More specifically, in the modelling module 13 model, the high-density phase (the total quantity of which, in the example described, is determined by steam strength) is present in the form of spherical droplets 20 dispersed in the low-density phase and of a diameter $D_K$ ranging between a minimum diameter $D_{MIN}$ and a maximum diameter $D_{MAX}$ (Figure 4).

In the embodiment described, the most probable minimum and maximum diameters $D_{MIN}$ and $D_{MAX}$ are determined according to the equations:

$$D_{MIN} = \frac{K1}{\left[\left(12 \cdot V_S W_{SHD}\right)/\left(2 \cdot 32.174 \cdot W_{VS}\right)\right]^{N1}} \qquad (1a)$$

$$D_{MAX} = \frac{K2}{\left[\left(12 \cdot V_S W_{SHD}\right)/\left(2 \cdot 32.174 \cdot W_{VS}\right)\right]^{N2}} \qquad (1b)$$

where: K1, K2, N1 and N2 are empirical constants; $V_S$ is the absolute steam velocity (i.e. in a fixed reference system with respect to stator 2); $W_{SHD}$ is the specific volume of water (high-density phase); and $W_{VS}$ is the specific volume of saturated steam (the denominator in equations (1a) and (1b) is also known as the "dynamic head", and represents the physical-dynamic characteristics of the water in given thermodynamic conditions : maximum and minimum diameters $D_{MAX}$, $D_{MIN}$ are actually expressed as a function of this term on the basis of an empirical correlation). Maximum diameter $D_{MAX}$ is also related to the Weber number, which takes into account the surface tension of droplets 20 and in turn depends on thermodynamic conditions.

Once minimum diameter $D_{MIN}$ and maximum diameter $D_{MAX}$ have been determined, the range between them is divided into a predetermined number of subranges, based on which a probability density PR is built. One example, comprising five equal subranges, is shown in Figure 5. In this case, the subranges including the two limits (indicated $D_1$ and $D_5$) are assigned a constant probability density of 0.125; and the other subranges, indicated $D_2$, $D_3$, $D_4$, are assigned a constant probability density of 0.25. The subranges may, of course, be defined differently, and different probability distributions constructed.

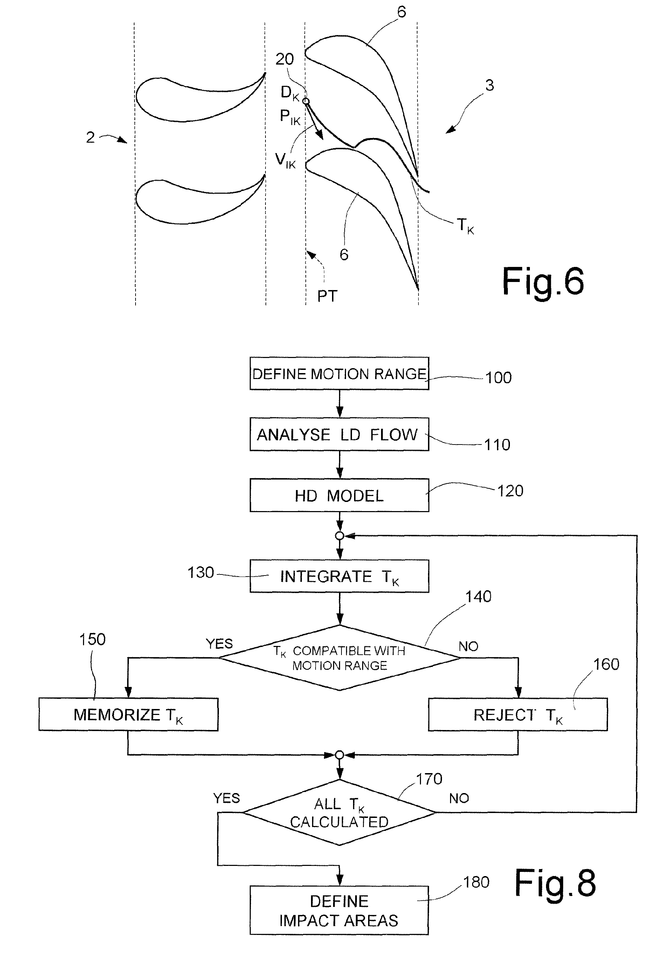

Spherical droplets 20 are then defined, the diameters $D_K$ of which are determined on the basis of probability density PR defined as described above. The droplets are also defined so that their total mass is compatible with total quantity, here determined by steam strength. Finally, modelling module 13 assigns droplets 20 respective positions $PI_K$ and initial velocities $VI_K$, e.g. on the basis of low-density phase velocity range $V_F$ and the load percentage (see also Figure 6). For example, the initial positions $PI_K$ of droplets 20 are defined in a plane PT crosswise to axis A at the mouth of rotor 3, and are equally spaced radially and angularly.

The geometric limits of the motion range, the low-density phase velocity range VF, and the parameters of the droplet 20, modelling the high-density phase, are then sent to computing module 15, which determines the trajectories of droplets 20 by defining and integrating motion equations associated with the droplets.

In the embodiment described, computing module 15 employs, for each droplet 20, a vector equation of the type:

$$\vec{F}_D = M \frac{d\vec{V}_{HD}}{dt} \qquad (2)$$

where $\vec{F}_D$ is the force due to aerodynamic drag of the low-density phase, and M and $\vec{V}_{HD}$ are the mass and absolute (vector) velocity of droplet 20 respectively.

Mass M and force $\vec{F}_D$ are defined as follows:

$$M = \pi \rho_{HD} D_K^3 / 6 \qquad (3)$$

$$\vec{F}_D = -\frac{1}{2} C_D \rho_{LD} \left( D_K^2 / 4 \right) \left| \vec{V}_R \right| \vec{V}_R \tag{4}$$

where $\rho_{HD}$ and $\rho_{LD}$ are the high-density and low-density phase densities respectively; $\vec{V}_R$ is the relative velocity of droplet 20 with respect to the low-density phase; and $C_D$ is the aerodynamic drag coefficient of droplet 20, which may be expressed as a function of Reynolds and Knudsen numbers. If $\vec{V}_{LD}$ is the absolute velocity of the low-density phase at the point at which droplet 20 is located, relative velocity $\vec{V}_R$ is given by the equation:

$$\vec{V}_R = \vec{V}_{HD} - \vec{V}_{LD} \tag{5}$$

Combining the above equations and defining quantity $Q_K$ as follows :

$$Q_K = \frac{3}{4} \frac{\rho_{LD}}{\rho_{LD} D_K} \tag{6}$$

gives :

$$\frac{d\vec{V}_{HD}}{dt} = -Q_K C_D \left| \vec{V}_R \right| \vec{V}_R \tag{7}$$

Computing module 15 determines trajectories $T_K$ of droplets 20 by integrating, for each droplet, equation (7) determined using the corresponding parameters, and also taking into account the geometric limits of the motion range and the angular speed $\omega$ of rotor 3 (one example is shown in Figure 6). Integration is repeated under different load conditions.

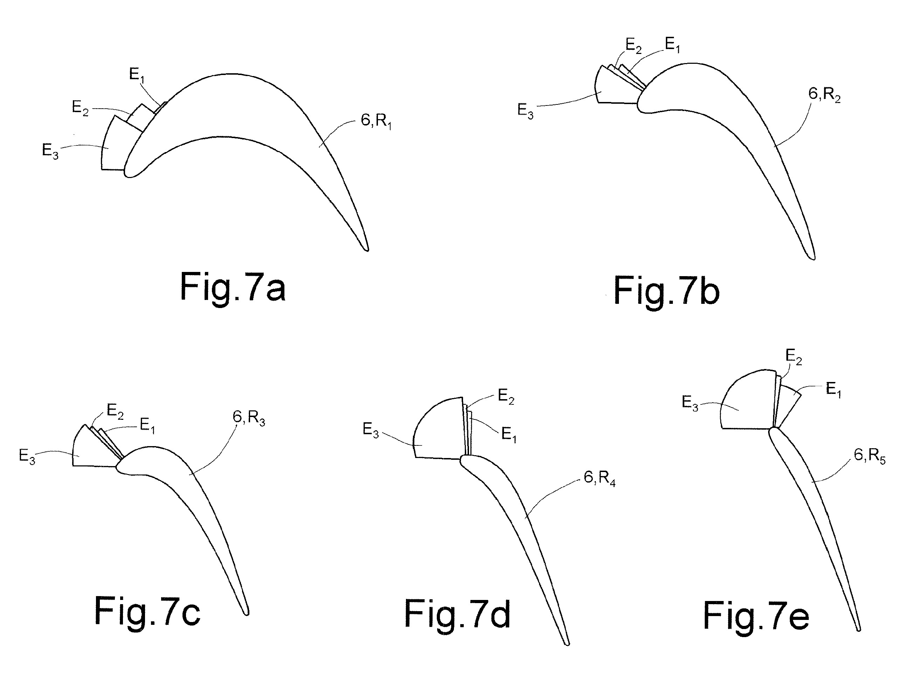

Using the integration result and the calculated trajectories $T_K$, the computing module defines the impact areas on blades 6 of rotor 3, which are most exposed to erosion by interaction with high-density phase droplets 20. In so doing, computing module 15 takes into account the motion quantity exchanged on average between droplets 20 and blades 6, and in particular the number of incident droplets per unit of time and area, their mass M, and their impact velocity in terms of both direction and absolute value. The impact areas are defined, for example, by surface portions of each blade 6 subjected to a perpendicular force of intensity, on average, greater than a predetermined threshold. The Figure 7a-7e example shows impact areas subject to low (E1), medium (E2), and high (E3) erosion on different (in this case, five) sections of a blade 6 in respective blade-to-blade planes and at different distances R1-R5 from axis A of rotor 3.

Figure 8 shows a simplified flow chart of the procedure performed by processing unit 10.

To begin with (block 100), limit definition module 11 defines the geometric limits of the motion range being examined.

Next (block 110), flow analysis module 12 generates velocity range VF describing the velocity distribution of the low-density phase in stage 1a in stationary conditions.

Next (block 120), modelling module 13 defines the high-density phase model and all the parameters associated with it. More specifically, modelling module 13 determines the total mass of the high-density phase, minimum and maximum diameters $D_{MIN}$, $D_{MAX}$ and actual diameters $D_K$ of droplets 20 (using a probability density PR as explained above), and the initial conditions of the droplets (initial position $PI_K$ and initial velocity $VI_K$, Figure 6).

At this point (block 130), computing module 15 calculates trajectories $T_K$ of droplets 20 by integrating equation (7) for each droplet, and also taking into account the geometric limits of the motion range and the angular speed $\omega$ of rotor 3.

More specifically, following integration for each droplet 20, computing module 15 checks whether trajectory $T_K$ is compatible with the motion range constraints and limits (block 140). If it is (YES output of block 140), i.e. all the positions along trajectory $T_K$ are compatible with the motion range limits, trajectory $T_K$ is memorized (block 150), otherwise (NO output of block 140), it is rejected (block 160) .

Once the check has been carried out, computing module 15 integrates motion equation (7) for another droplet 20, until trajectories $T_K$ of all the droplets 20 are calculated (NO output of block 170).

Once all trajectories $T_K$ have been integrated (YES output of block 170), computing module 15 uses trajectories $T_K$ to determine interaction between droplets 20 and blades 6 of rotor 3, and so define impact areas E1, E2, E3 subject to erosion (block 180).

As compared with conventional methods, the method according to the invention advantageously provides for quickly and easily determining the parts of a turbine machine most subject to erosion, and in particular with no need for complex three-dimensional, two-phase fluid models, or for high-cost data collecting experiments involving the manufacture of prototypes or mockups and long-term testing and data collection. The areas determined using the method according to the invention may then be selectively erosion-proofed without affecting the rest of the turbine machine (particularly the rotor parts) not particularly subject to erosion. This therefore provides, on the one hand, for reducing cost, by only applying high-cost erosion-proofing treatment where it is actually needed, and, on the other hand, avoids impairing the fatigue resistance of the rotor as a whole.

Computation-wise, the method described is much more straightforward than methods based on two-phase fluid models, and, what is more, can also be applied to working machines.

Clearly, changes may be made to the control device as described herein without, however, departing from the scope of the present invention, as defined in the accompanying Claims.

In particular, the method may be used to study erosion of any type of turbine machine using a two-phase fluid with a considerable difference in density between the two phases, or a one-phase fluid containing, in normal operating conditions, impurities in the form of particles, which in fact are comparable to a high-density phase in a significantly lower-density liquid or gaseous phase.

Motion equations of any formulation may obviously be integrated.

Also, the droplet diameters may be defined otherwise than as described. In particular, probability distributions other than the one indicated may be built.

**Claims**

1. A method of determining erosion areas of a turbine machine (1), comprising the step of defining geometric limits of a motion range that can be occupied by a stream of fluid having a low-density phase and a high-density phase; **characterized by** comprising the steps of:

   modelling the high-density phase in the form of a number of droplets (20) dispersed in the low-density phase;
   calculating a trajectory ($T_K$) in the motion range for each droplet (20); and
   defining impact areas (E1, E2, E3) of the droplets (20) on parts (3, 6) of the turbine machine (1) on the basis of the calculated trajectories ($T_K$).

2. A method as claimed in Claim 1, wherein the step of calculating a trajectory ($T_K$) in the motion range for each droplet (20) comprises:

   defining motion equations (7) for each droplet (20); and
   integrating the motion equations (7) for each droplet (20).

3. A method as claimed in Claim 2, wherein the integrating step comprises assigning initial conditions ($PI_K$, $VI_K$) to each droplet (20) as a function of a load percentage of the turbine machine (1).

4. A method as claimed in Claim 3, wherein the step of assigning initial conditions comprises defining initial positions ($PI_K$) of the droplets (20) in a plane (PT) crosswise to an axis (A) of the turbine machine (1).

5. A method as claimed in any one of the foregoing Claims, wherein the modelling step comprises defining a maximum diameter ($D_{MAX}$) and a minimum diameter ($D_{MIN}$) of the droplets (20).

6. A method as claimed in Claim 5, wherein the modelling step comprises :

   defining a probability density (PR) in a range extending between the minimum diameter ($D_{MIN}$) and the maximum diameter ($D_{MAX}$); and
   selecting actual diameters ($D_K$) of the droplets on the basis of the probability density (PR).

7. A method as claimed in any one of the foregoing Claims, wherein the step of defining impact areas (E1, E2, E3) comprises determining a number of droplets (20) incident on the parts (3, 6) of the turbine machine (1) per unit of time and area.

8. A method as claimed in Claim 7, wherein the step of defining impact areas (E1, E2, E3) comprises determining a mass (M) of the droplets (20) and an impact velocity (V?) of the droplets (20) on the parts (3, 6) of the turbine machine (1).

9. A method as claimed in any one of the foregoing Claims, and comprising the step of determining flow conditions (VF) of the low-density phase within the motion range.

10. A method of erosion-proofing a turbine machine, comprising the steps of:

   determining erosion areas (E1, E2, E3) of a turbine machine (1) using the method as claimed in any one of the foregoing Claims; and
   selectively subjecting the erosion areas (E1, E2, E3) to erosion-proofing treatment.

Fig.2

Fig.1

Fig.3

Fig.4

Fig.5

Fig.6

DEFINE MOTION RANGE — 100

ANALYSE LD FLOW — 110

HD MODEL — 120

130 — INTEGRATE $T_K$

140

150    YES    $T_K$ COMPATIBLE WITH    NO    160
            MOTION RANGE

MEMORIZE $T_K$                REJECT $T_K$

170

YES    ALL $T_K$    NO
       CALCULATED

DEFINE — 180
IMPACT AREAS

Fig.8

Fig.7a

Fig.7b

Fig.7c

Fig.7d

Fig.7e

EP 1 843 265 A1

**European Patent Office**

# EUROPEAN SEARCH REPORT

Application Number

EP 06 42 5244

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | MAZUR Z ET AL: "Numerical 3D simulation of the erosion due to solid particle impact in the main stop valve of a steam turbine" APPLIED THERMAL ENGINEERING ELSEVIER UK, vol. 24, no. 13, 12 February 2004 (2004-02-12), pages 1877-1891, XP002405181 ISSN: 1359-4311 | 1-4,7-9 | INV. G06F17/50 |
| Y | * title * * figures 3,6 * * section 3.1 * * page 1883, last paragraph * * page 1882, paragraph 3 * * equation 11 * * page 1884, paragraph 2 * ----- | 5,6 | |
| Y | IVANOV V G ET AL: "Movement of moisture droplets in a curvilinear channel" CHEM PET ENG JUL 1988, vol. 23, no. 11-12, July 1988 (1988-07), pages 616-622, XP002405400 * page 616, paragraph 4 * ----- | 5,6 | |
| A | HAMED AWATEF A ET AL: "Turbine blade surface deterioration by erosion" ASME TURBO EXPO 2004, 2004, pages 1-15, XP002405413 * the whole document * ----- | 1-9 | TECHNICAL FIELDS SEARCHED (IPC) G06F |
| A | ROSNER DANIEL E ET AL: "Rapid estimation of cylinder erosion rates in abrasive dust-laden streams" AICHE J; AICHE JOURNAL MAY 1995 AICHE, NEW YORK, NY, USA, vol. 41, no. 5, May 1995 (1995-05), pages 1081-1098, XP002405414 * the whole document * ----- -/-- | 1-9 | |

~~The present search report has been drawn up for all claims~~

| Place of search | Date of completion of the search | Examiner |
|---|---|---|
| Munich | 9 November 2006 | WELLISCH, J |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**European Patent Office**

# EUROPEAN SEARCH REPORT

Application Number

EP 06 42 5244

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | PETR V ET AL: "Modelling of the droplet size distribution in a low-pressure steam turbine"<br>PROCEEDINGS OF THE INSTITUTION OF MECHANICAL ENGINEERS, PART A (JOURNAL OF POWER AND ENERGY) MECH. ENG. PUBLICATIONS UK,<br>vol. 214, no. A2, 2000, pages 145-152, XP001247854<br>ISSN: 0957-6509<br>* the whole document * | 5,6 | |
| A | KRZYZANOWSKI J A ET AL: "Some aspects of erosion prediction of steam turbine blading"<br>J ENG GAS TURBINES POWER TRANS ASME; JOURNAL OF ENGINEERING FOR GAS TURBINES AND POWER, TRANSACTIONS OF THE ASME APR 1994 PUBL BY ASME, NEW YORK, NY, USA,<br>vol. 116, no. 2, April 1994 (1994-04), pages 442-451, XP001247770<br>* the whole document * | 1-9 | |
| A | MOORE M J ET AL: "Research at C.E.R.L. on turbine blade erosion"<br>THERMODYN AND FLUID MECH CONV; THERMODYNAMICS AND FLUID MECHANICS CONVENTION 1968 INSTITUTE OF MECHANICAL ENGINEERS, LONDON, ENGLAND,<br>vol. 182, no. Part 3H, 1968, pages 61-68, XP001247771<br>* figure 5.2 * | 1-9 | **TECHNICAL FIELDS SEARCHED (IPC)** |

~~The present search report has been drawn up for all claims~~

| Place of search | Date of completion of the search | Examiner |
|---|---|---|
| Munich | 9 November 2006 | WELLISCH, J |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

European Patent

Office

**Application Number**

EP 06 42 5244

---

**CLAIMS INCURRING FEES**

The present European patent application comprised at the time of filing more than ten claims.

☐ Only part of the claims have been paid within the prescribed time limit. The present European search report has been drawn up for the first ten claims and for those claims for which claims fees have been paid, namely claim(s):

☐ No claims fees have been paid within the prescribed time limit. The present European search report has been drawn up for the first ten claims.

---

**LACK OF UNITY OF INVENTION**

The Search Division considers that the present European patent application does not comply with the requirements of unity of invention and relates to several inventions or groups of inventions, namely:

see sheet B

☐ All further search fees have been paid within the fixed time limit. The present European search report has been drawn up for all claims.

☐ As all searchable claims could be searched without effort justifying an additional fee, the Search Division did not invite payment of any additional fee.

☐ Only part of the further search fees have been paid within the fixed time limit. The present European search report has been drawn up for those parts of the European patent application which relate to the inventions in respect of which search fees have been paid, namely claims:

☒ None of the further search fees have been paid within the fixed time limit. The present European search report has been drawn up for those parts of the European patent application which relate to the invention first mentioned in the claims, namely claims:

1-9

**European Patent Office**

**LACK OF UNITY OF INVENTION
SHEET B**

Application Number

EP 06 42 5244

The Search Division considers that the present European patent application does not comply with the requirements of unity of invention and relates to several inventions or groups of inventions, namely:

```
1. claims: 1-9

       Method of determining erosion areas of a turbine machine.
                          ---

2. claim: 10

            Erosion proofing of a turbine machine.
                          ---
```